# EUROPÄISCHE PATENTSCHRIFT

(11) **EP 1 455 636 B1**
(45) Veröffentlichungstag und Bekanntmachung des Hinweises auf die Patenterteilung: **08.04.2009**
(21) Anmeldenummer: 02804903.9
(22) Anmeldetag: 16.12.2002
(51) Int. Cl.: A61B 1/24, A61C 5/14

(54) **LIPPEN-UND WANGENEXPANDER**
LIP AND CHEEK EXPANDER
EXTENSEUR DE LEVRES ET DE JOUES

(30) Priorität: 17.12.2001 CH 20012305
(43) Veröffentlichungstag der Anmeldung: 15.09.2004
(73) Patentinhaber: Ivoclar Vivadent AG, 9494 Schaan (LI)
(72) Erfinder: HORVATH, Domonkos, 79798 Jestetten (DE); LUTZ, Felix DI, . (DE)
(74) Vertreter: UEXKÜLL & STOLBERG
(86) Internationale Anmeldenummer: PCT/EP2002/014342
(87) Internationale Veröffentlichungsnummer: WO 2003/051185

(56) Entgegenhaltungen:
- EP-A- 0 988 834
- WO-A-98/34559
- DE-C- 239 700
- DE-C- 422 782
- DE-C- 512 266
- DE-U- 8 323 817
- US-A- 4 889 490
- US-A- 4 944 313
- US-A- 5 199 872

## Beschreibung

Die Erfindung bezieht sich auf Lippen- und Wangenexpander zur Verwendung beim Ausführen dentalmedizinischer, dentalhygienischer oder dentaldokumentierender Tätigkeiten.

Während der voranstehend genannten Tätigkeiten ist es in der Regel notwendig, die an die Zahnreihen zum Anliegen kommenden Lippen und Wangen von den Zahnreihen abzuhalten, um einen ausreichenden Arbeitsraum freizumachen, die notwendigen Sichtverhältnisse zu ermöglichen bzw. die Verletzungsgefahr für die Lippen und Wangen zu reduzieren.

Beim Durchführen von Tätigkeiten im Seitenbereich einer Zahnreihe wird die jeweilige Wange abgehalten, indem über einen sogenannten Wangenabhalter, über den Mundspiegel bzw. über einen Abhaltehaken eine Kraft auf die Lippe bzw. die Wange ausgeübt wird. Diese Druckbelastungen können zu Druckstellen oder Schwellungen an Lippen und Wangen führen bzw. Schmerzen verursachen.

Solche in der Regel metallenen Abhalter eignen sich ausschließlich zum einseitigen Freimachen eines Arbeitsraums. Zum Ausführen von Tätigkeiten an verschiedenen Bereichen der Zahnreihen sind für ein effektives Abhalten jedoch unterschiedlich ausgebildete Wangenabhalter notwendig. Nicht zuletzt müssen Mundspiegel, Wangenabhalter bzw. Abhaltehaken von Hand geführt werden. Dadurch steht entweder dem behandelnden Zahnarzt nur mehr eine Hand zur Verfügung, und/oder es ist für das Halten der Abhalter zusätzlich eine Assistentin erforderlich. Der beschränkte Arbeitsraum setzt ein exakt koordiniertes Zusammenspiel der Bewegungen des Behandelnden und der Assistentin voraus. Zudem gelingt es selbst der geschicktesten Assistentin nicht, die empfindlichen Lippen, Mundwinkel und Wangen zur vollsten Zufriedenheit für den Patienten und den Behandelnden mit solchen Instrumenten abzuhalten.

Für das Durchführen von Tätigkeiten im Frontbereich der Zahnreihen sind metallene Spreizklammern bekannt, welche die Mundöffnung aufspreizen. Diese Klammern können mit metallenen Lippenschildern zur gleichmäßigeren Einleitung der Spreizkräfte versehen sein.

Auch sind Spreizklammern bekannt, bei denen vorgeformte Lippenschilder und eine starr mit diesen verbundene Spreizeinrichtung durch ein einziges Kunststoff-Spritzgußteil gebildet werden. Im Gegensatz zu den vorangehend erwähnten, metallenen Instrumenten erlauben sie zwar einerseits ein etwas sanfteres Abhalten, andererseits ist jedoch ein Sterilisieren nur bedingt möglich, da für diesen Zweck verwendbare Kunststoffe im allgemeinen nicht autoklavierbar sind. Bei ungenügender Sterilisation ist aber beispielsweise Herpes labialis, der an den Lippen und Mundwinkeln häufig vorkommt, leicht übertragbar.

Auch ist es mit herkömmlichen Instrumenten - bedingt durch deren Konstruktion - nicht möglich, die Lippen und Wangen von den Zahnreihen über deren gesamte Länge gleichzeitig abzuhalten. Zudem wird von den Patienten das abwechselnde Drücken bzw. Ziehen mit solchen Instrumenten als unangenehm empfunden.

Ein Abhalten der jeweiligen Lippen und Wangen mittels herkömmlicher Instrumente beschränkt einerseits die Zugänglichkeit zur Mundhöhle und kann andererseits - insbesondere bei einem längeren Anlegen - zu traumatischen postoperativen Erscheinungen im Bereich der Lippen und Wangen führen.

So ist aus der DE 83 23 817 U1 ein Schutzkörper mit vorgeformtem U-förmigen Längsprofil bekannt, der aus einem weichen, elastischen Material gefertigt ist. Wird eine der Lippen in diesen U-förmigen Schutzkörper geschoben, so wird sie durch den Schutzkörper aktiv gegen Verletzungen durch die Behandlungswerkzeuge geschützt. Dieser Schutz kann noch gesteigert werden, indem zusätzlich Armierungen aus Edelstahldraht in den U-förmigen Schutzkörper eingearbeitet werden. Eine Ausführungsform der Erfindung gewährleistet ein Offenhalten der Mundöffnung, jedoch nicht ein Abhalten der Lippen von den Zahnreihen. Für ein solches Abhalten im Frontbereich wird eine weitere Ausführungform offenbart, die durch einen zusätzlich am Schutzkörper angebrachten, metallenen Abstandshaltebügel gekennzeichnet ist. Dieser Abstandshaltebügel, der an der hinter der geschützten Lippe liegenden Zahnreihe abstützbar ist, gewährleistet den gewünschten Abstand der Lippe zur Zahnreihe. Durch diese Art des Abstützens werden aber in der Regel schmerzhafte Druckstellen verursacht.

Der Erfindung liegt daher die Aufgabe zugrunde, Mängel des Standes der Technik zu beheben. Insbesondere soll ein Lippen- und Wangenexpander vorgeschlagen werden, welcher vielseitig anwendbar und preiswert herstellbar ist, sowie die an den Zahnreihen zum Anliegen kommenden Lippen und Wangen gleichzeitig abhält und schützt.

Diese Aufgabe wird durch die Vorrichtung des unabhängigen Patentanspruchs 1 gelöst.

Weitere vorteilhafte oder alternative Aus- bzw. Weiterbildungen der Erfindung sind in den Merkmalen der abhängigen Patentansprüche beschrieben.

Wenn im Zusammenhang mit der Erfindung von Spannrahmen die Rede ist, so sollen im weitesten Sinne räumliche Strukturen verstanden werden, welche gegen das Zentrum der Struktur gerichtete Zugkräfte von einer vorbestimmten Größenordnung aufnehmen können. Solche Spannrahmen können starr oder elastisch, gegebenenfalls zusätzlich plastisch verformbar ausgebildet sein. Elastisch ausgebildete Spannrahmen erleichtern unter anderem das Anlegen eines erfindungsgemäßen Expanders. Sie können beispielsweise aus Draht, aus Vollprofilen, Röhrchen oder anderen geeigneten Hohlprofilen hergestellt sein bzw. aus Metalllegierungen, aus Kunststoffe, aus Gummi oder aus Verbundwerkstoffen bestehen. Auch kann ein Spannrahmen aus mehreren zusammengefügten Teilen stehen. Wenigstens eines dieser Rahmenteile kann an eine Speichelabsaugvorrichtung anschließbar und als mit Löchern versehenes Röhrchen ausgebildet sein.

Aus statischen Überlegungen werden die Spannrahmen in der Regel als geschlossene Spannrahmen ausgebildet. Aber auch offene Spannrahmen sind möglich und können für spezielle Aufgaben von Vorteil sein. Offene Spannrahmen müssen im Vergleich zu geschlossenen Spannrahmen massiver ausgebildet werden, um den - im angelegten Zustand des Expanders - auftretenden Belastungen standhalten zu können.

Sind die Spannrahmen, insbesondere in den beiden Mundwinkelbereichen, größer als die Mundöffnung ausgebildet, so kann ein Heraus- bzw. Hineinrutschen eines Expanders gemäß der Erfindung wirksam verhindert werden. Es ist auch denkbar, insbesondere außen an der Mundöffnung anliegende Spannrahmen verstellbar auszubilden.

Wenn im Zusammenhang mit der Erfindung von folienartigen Mitteln die Rede ist, so sollen im weitesten Sinne flächige Gebilde verstanden werden, die einem Verbiegen im Gegensatz zum Dehnen im wesentlichen keinen Widerstand entgegensetzen. Die folienartigen Mittel können aus elastisch dehnbarem, aber im Prinzip auch aus undehnbarem Material hergestellt sein.

Im Gegensatz zum Stand der Technik wird von erfindungsgemäßen Lippen- und Wangenexpandern auf die Lippen und Wangen, die von den Zahnreihen abzuhalten sind, über die folienartigen Mittel eine Druckkraft großflächig verteilt ausgeübt. Die folienartigen Mittel sind einenends mit einem innerhalb der Mundhöhle befindlichen inneren Spannrahmen und andernends mit einem auf den Lippen bzw. Wangen außen anliegenden äußeren Spannrahmen verbunden.

Die folienartigen Mittel sind vorteilhaft dünn und elastisch ausgebildet. Im Zusammenspiel mit elastischen, gegebenenfalls vorgebogenen, den anatomischen Gegebenheiten angepaßten, Spannrahmen können sehr einfache, extrem flexible und breit anwendbare Lippen- und Wangenexpander geschaffen werden, die gegenüber herkömmlichen Abhaltern und Spreizklammern viele Vorteile bieten.

Beim Anlegen des Expanders werden von den folienartigen Mitteln Druckkräfte großflächig verteilt und zirkulär um die Mundöffnung aufgebaut. Durch die dünne Wandstärke und die Elastizität der folienartigen Mittel werden diese Kräfte gleichmäßig verteilt und sanft aufgebaut. Durch ein vorbestimmtes Materialdefizit der folienartigen Mittel können die Druckkräfte gesteuert werden, welche die Lippen schonend offenhalten. Zudem üben die elastischen Spannrahmen maßvoll und über große Bereiche Druckkräfte auf die Wangen aus. Dadurch kann für den Patienten auf bequeme Art die Mundöffnung zirkulär weit geöffnet gehalten und gleichzeitig die Lippen und Wangen sanft von den Zahnreihen abgehalten werden.

Durch eine Applikation von beispielsweise Gleitmitteln, Geschmacksstoffen, Medikamenten, Salben bzw. Emulsionen auf wenigstens Teilbereichen der folienartigen Mittel kann der Tragkomfort für den Patienten weiter gesteigert oder können andere vorteilhafte Wirkungen durch das Anlegen des erfindungsgemäßen Expanders erzielt werden.

Durch das flexible Konstruktionskonzept des Expanders bleibt auch bei angelegtem Expander die Gewebedynamik im wesentlichen erhalten. So ist bei Operationen ein zusätzliches Abhalten mit einem Abhaltehaken oder dem Mundspiegel jederzeit möglich.

Lippen und Mundwinkel sind über die folienartigen Mittel vor Verletzungen durch die verwendeten Instrumente weitgehend geschützt. Sie sind auch ein wirksamer Schutz gegen beispielsweise Herpes labialis oder leicht aufreißende und blutende Rhagaden. Störender Bartwuchs wird von den folienartigen Mitteln flächig zirkular um die Mundhöhle abgedeckt und stört so weder die Sicht noch die Behandlung.

Da sich der Expander - auf Grund seiner flexiblen Konstruktion - der gegebenen Anatomie des Patienten folgend an Lippen und Wangen anschmiegt, wird der Arbeitsraum durch den Expander nicht verkleinert und beeinträchtigt.

Nicht zuletzt erlaubt die einfache Konstruktion eines Expanders gemäß der Erfindung eine kostengünstige Herstellung, die eine Einmalverwendung ermöglicht. Die damit verbundenen hygienischen Vorteile liegen auf der Hand.

Nachstehend wird die Erfindung anhand der Figuren der Zeichnungen rein beispielhaft näher erörtert. Gleiche Teile in unterschiedlichen Ausführungsbeispielen, welche dieselben Funktionen ausüben, sind nachstehend mit gleichen Bezeichnungen und Bezugszeichen versehen. Es zeigen:
- Figur 1: eine Seitenansicht eines erfindungsgemäßen Lippen- und Wangenexpanders im nicht angelegten Zustand,
- Figur 2: den erfindungsgemäßen Lippen- und Wangenexpander der Figur 1 im nicht-angelegten Zustand in Draufsicht,
- Figur 3: einen an eine Mundöffnung angelegten erfindungsgemäßen Lippen- und Wangenexpander in Frontalänsicht,
- Figur: 4 eine Teilansicht des an die Mundöffnung aus Figur 3 angelegten Lippen- und Wangenexpanders im Schnitt,
- Figur 5: eine teilweise geschnittene Ansicht des Unterkiefers vor dem Einsetzen eines erfindungsgemäßen Lippen- und Wangenexpanders,
- Figur 6: eine teilweise geschnittene Ansicht des Unterkiefers nach dem Einsetzen eines erfindungsgemäßen Lippen- und Wangenexpanders,
- Figur 7: eine vergrößerte Ansicht der Umgebung VII der Spannrahmen des Lippen- und Wangenexpanders der Figur 2 und
- Figur 8: das folienartige Mittel vor der Verbindung mit den beiden Spannrahmen.

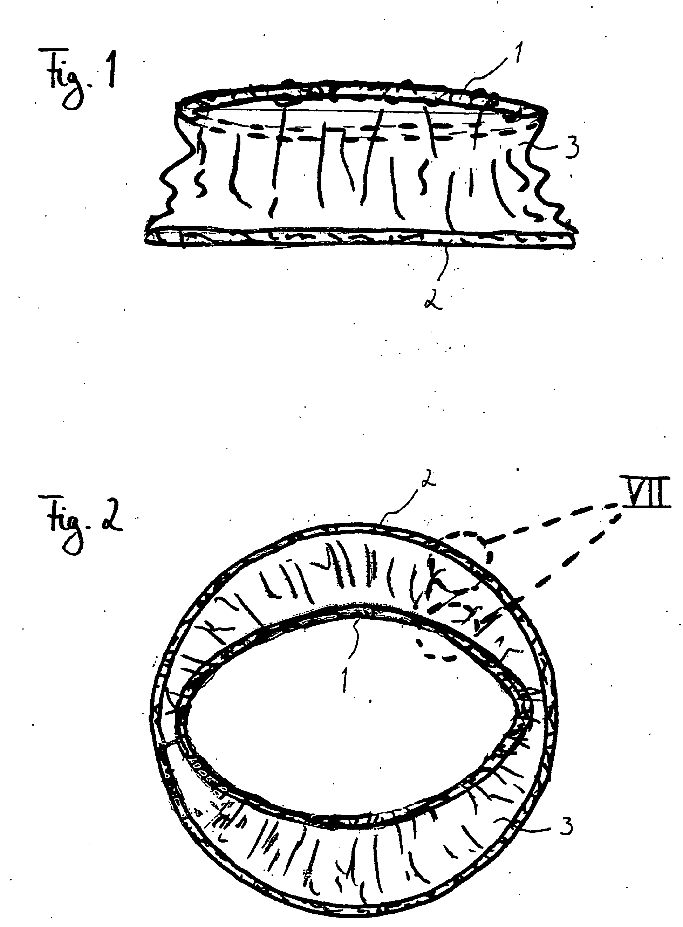

Die Figuren 1 und 2 zeigen ein Ausführungsbeispiel eines erfindungsgemäßen Lippen- und Wangenexpanders im nicht angelegten Zustand. Dieser Expander weist zwei Spannrahmen 1 und 2, die ringförmig geschlossen ausgebildet sind, und diese verbindende folienartige Mittel 3 auf. Die Mittel sind in Form einer umlaufenden, dünnen Spannhaut geschlossen ausgebildet.

In diesem Ausführungsbeispiel weisen die Spannrahmen 1 und 2 die Form von unterschiedlich großen, gewölbten Ellipsen auf. Sie sind elastisch biegbar ausgebildet und können beispielsweise aus einem umlaufenden Edelstahldraht gefertigt sein.

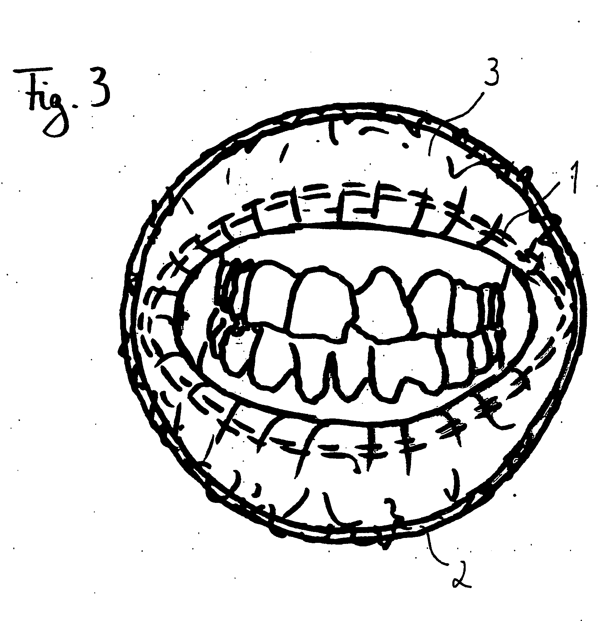

Einer der Spannrahmen, der entsprechend Figur 3 innerhalb der Mundhöhle angeordnet wird, der innere Spannrahmen 1, weist größere Abmessungen als der äußere Spannrahmen 2 auf.

Der innere Spannrahmen 1 ist über die folienartigen Mittel 3 mit dem äußeren Spannrahmen 2 verbunden. Die Spannhaut ist in einem der Figur 1 entsprechenden nicht angelegten Zustand ohne eine vorbestimmte Form und frei von Spannungen. Sie ist in Form einer dünnen, leicht dehnbaren Folie ausgebildet und besteht beispielsweise aus elastischem Latex.

In diesem Ausführungsbeispiel ist der innere Spannrahmen 1 bzw. der äußere Spannrahmen 2 über einen Klebstoff vollumfänglich mit der Spannhaut fest verbunden. Es wäre aber auch möglich, die folienartigen Mittel 3 mit dem inneren bzw. dem äußeren Spannrahmen über Haltefalten oder Haltehaken lösbar zu verbinden. Die beiden Spannrahmen 1 und 2 können zudem mehrmals von der Folie umwunden sein. Auf diese Weise wird die relativ kleine Auflagefläche der metallenen Spannrahmen 1 und 2 wesentlich vergrößert sowie über das zusätzliche Folienmaterial weicher ausgebildet. Der Tragekomfort des Expanders kann dadurch noch weiter gesteigert werden.

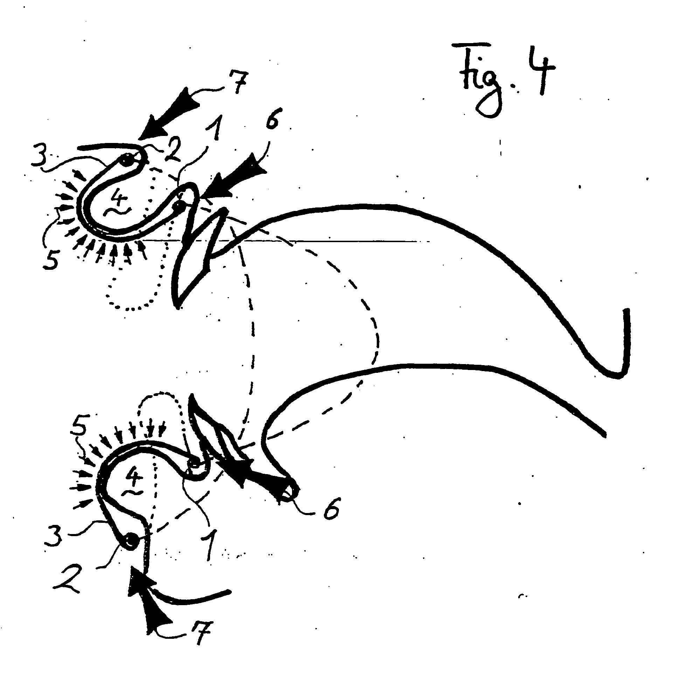

Figur 3 zeigt in Frontalansicht die Mundöffnung einer Person, an die der Expander aus den Figuren 1 und 2 angelegt ist. Der innere Spannrahmen 1 ist in Figur 4 mit unterbrochenen Strichen angedeutet.

Hier liegt die Spannhaut an den Lippen und den angrenzenden Wangenbereichen an und übt gleichmäßig flächig verteilt eine Druckkraft aus. Dank der elastischen Ausbildung der folienartigen Mittel 3 sowie einer gewissen elastischen Verbiegbarkeit des inneren bzw. des äußeren Spannrahmens 1 bzw. 2 kann in Kombination mit einer abgestimmten Dimensionierung dieser drei Bauteile die Druckkraftverteilung im wesentlichen gleichmäßig erfolgen. Auf diese Weise kann auch eine gleichmäßige Dehnung der Lippen und Wangen erzielt werden.

Weist der innere Spannrahmen 1 größere Abmessungen als der äußere Spannrahmen 2 auf, so werden im Bereich der kleinen Scheitelkreise der Ellipsen die zwischen den Spannrahmen liegenden Teile der Wangen etwas nach vorne gekippt. Auf diese' Weise werden die Wangen zusätzlich noch weiter von den Zahnreihen abgehalten. Der jeweilige Abstand der Wange von den Zahnreihen kann auch durch eine entsprechende Formgebung des inneren Spannrahmens 1, beispielsweise durch zusätzliche, schildartige Ausbiegungen im Bereich der kleinen Scheitelkreise der Ellipse, vergrößert werden.

In diesem Ausführungsbeispiel befindet sich der innere Spannrahmen 1 auf Grund der Dimensionierung der Spannhaut im Bereich der großen Scheitelkreise der Ellipsen näher bei der Mundöffnung als der äußere Spannrahmen 2. Dadurch kommt der innere Spannrahmen 1 weder mit den Lippen- noch mit den Wangenbändchen in Berührung. Dies könnte aber auch durch entsprechend vorgebogene Einbuchtungen des inneren Spannrahmens erzielt werden.

Die vorliegende Erfindung ermöglicht einerseits eine gute Zugänglichkeit durch die Mundöffnung und andererseits das Vermeiden von schmerzhaften Druckstellen, selbst beim mehrstündigen Anlegen eines erfindungsgemäßen Expanders. Durch eine elastische Ausbildung der Bauteile des Expanders, gegebenenfalls in Kombination mit einer manuellen plastischen Verformung der Spannrahmen, können individuell unterschiedliche anatomische Gegebenheiten in der Regel gut kompensiert werden. Diesen unterschiedlichen Gegebenheiten oder speziellen Anforderungen betreffend den Abstand einzelner Teile der Lippen und Wangen von den Zahnreihen, wie dies bei manchen Behandlungen erforderlich sein kann, kann aber auch durch entsprechend ausgebildete Spannrahmen bzw. Spannhäute Rechnung getragen werden. Unterschiedliche Typen von Expandern könnten mit unterschiedlichen Farben gekennzeichnet sein.

Durch die flexible Konstruktion bzw. die elastische Ausbildung eines Expanders gemäß der Erfindung ist zudem - auch im angelegten Zustand - ein Schließen des Gebisses möglich. Auch kann bei Bedarf ein spezieller Bereich der Lippen bzw. Wangen zusätzlich mit einem herkömmlichen starren Instrument noch weiter von einer Zahnreihe abgehalten werden.

Figur 4 zeigt einen Schnitt durch den Expander und die Mundöffnung der Figur 3. Im Gegensatz zur Figur 3 sind der innere Spannrahmen 1 und der äußere Spannrahmen 2 sichtbar. Im Bereich der Mundöffnung liegen die folienartigen Mittel 3 an den Lippen 4 anschmiegend an. über die Spannhaut werden gleichmäßige Druckkräfte 5 flächig verteilt auf die Lippen 4 ausgeübt. Sie wirken den Schließ- und Zusammenziehkräften der Lippen- und Wangenmuskulatur entgegen und komprimieren die Lippen 4 - ausgehend von der gepunktet angedeuteten Normalstellung der Lippen - wulstartig. Von der Spannhaut werden auf den inneren Spannrahmen 1 bzw. den äußeren Spannrahmen 2 den Druckkräften 5 entsprechende umlaufende Zugkräfte 6 bzw. 7 ausgeübt. Bei geeigneter Ausbildung der Spannrahmen 1 bzw: 2 können im gezeigten Bereich die Zugkräfte 6 bzw. 7 praktisch vollständig von diesen aufgenommen werden. Auf diese Weise übt in diesem Bereich der innere Spannrahmen 1 keine Aufliegekräfte auf die jeweilige Schleimhaut der Lippen aus. In anderen Bereichen werden hingegen von den Spannrahmen 1 bzw. 2 nur Teile der Zugkräfte 6 bzw. 7 aufgenommen. Die resultierenden Aufliegekräfte bewirken ein entsprechendes Anliegen der Spannrahmen 1 bzw. 2. Der Expander wird durch das sich um die Mundöffnung einstellende Gleichgewicht der Kräfte stabil gehalten.

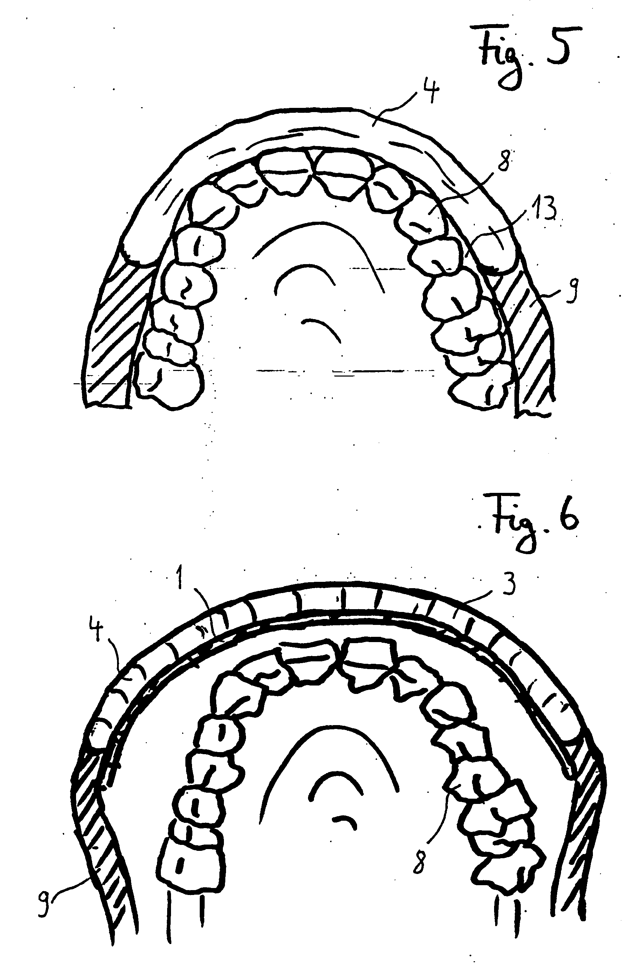

Um also den Lippen- und Wangenexpander funktionsgemäß in die Mundhöhle eines Patienten einzusetzen, wird der zweite Spannrahmen 1 zusammen mit einem Teil des folienartigen Mittels 3 in den Mund des Patienten eingeführt und der erste Spannrahmen 2 um den Mund herum an die perioralen Gesichtsbereiche angelegt. Dabei wird der zweite Spannrahmen 1 derart elastisch zusammengedrückt, daß er in das Vestibulum 13 eingesetzt werden kann. Nach dem Loslassen, preßt sich der zweite Spannrahmen 1 aufgrund seiner Elastizität selbst in das Vestibulum 13 hinein, wodurch er das folienartige Mittel 3 im Ober- und im Unterkiefer entlang des Vestibulums 13 in dieses hineinzieht und darin festhält. Dabei wird das Abdeckmittel 1 gespannt. Aus den Figuren 3 und 4 sowie der Figur 6, die eine Ansicht des Unterkiefers nach dem Einsetzen des Lippen- und Wangenexpanders in den Mund zeigt, ist ersichtlich, daß das folienartige Mittel 3 von dem am Gesicht anliegenden Spannrahmen 2 entlang der Gesichtshaut um die Mundwinkel und Lippen 4 herum und intraoral im Vestibulum 13 verläuft. Auf diese Weise werden Lippen und Mundwinkel abgedeckt, so daß das folienartige Mittel 3 ein Abdeckmittel darstellt. Der ins Vestibulum 13 eingespannte Spannring 2 drückt, wie weiter oben beschrieben, zusammen mit dem Abdeckmittel 3 Ober- und Unterkiefer vertikal und Wangen und Mundwinkel transveral auseinander. Figur 5 zeigt eine Ansicht des Unterkiefers vor dem Einsetzen des Lippen- und Wangenexpanders in die Mundhöhle eines Patienten. Der Vergleich zwischen den Figuren 5 und 6 veranschaulicht das durch den Lippen- und Wangenexpander bewirkte Abhalten der Lippen 4, Mundwinkel und Wangen 9 von der Reihe der Zähne 8 und die damit erreichte Aufdehnung des Vestibulums 13, die einen vergrößerten. Arbeitsraum für den Zahnarzt schafft.

Neben der in den Figuren dargestellten geschlossenen Ausbildung können die Spannrahmen 1, 2, wie bereits dargelegt, auch offen ausgebildet sein. In diesem Fall sind sie bevorzugt derart verbindbar, daß sie auf diese Weise in eine ringförmig geschlossene Form gebracht werden können. Ferner können die Spannrahmen unterschiedlichste Formen aufweisen. So kann es sein, daß die Spannrahmen 1, 2 eine im wesentlichen elliptische Grundform aufweisen oder in eine im wesentlichen elliptische Grundform gebracht werden können. Die Spannrahmen 1, 2 können aber auch eine kreisrunde Form aufweisen oder in eine kreisrunde Form bringbar sein, wobei der zweite Spannrahmen 1 einen kleineren Außendurchmesser als der erste Spannrahmen 2 aufweist. In diesem Fall beträgt der Außendurchmesser der Spannrahmen 1, 2 in der kreisrunden Form vorteilhaft 40 mm bis 120 mm, der zweite Spannrahmen 1 bevorzugt etwa 75 mm und der erste Spannrahmen 2 bevorzugt etwa 95 mm.

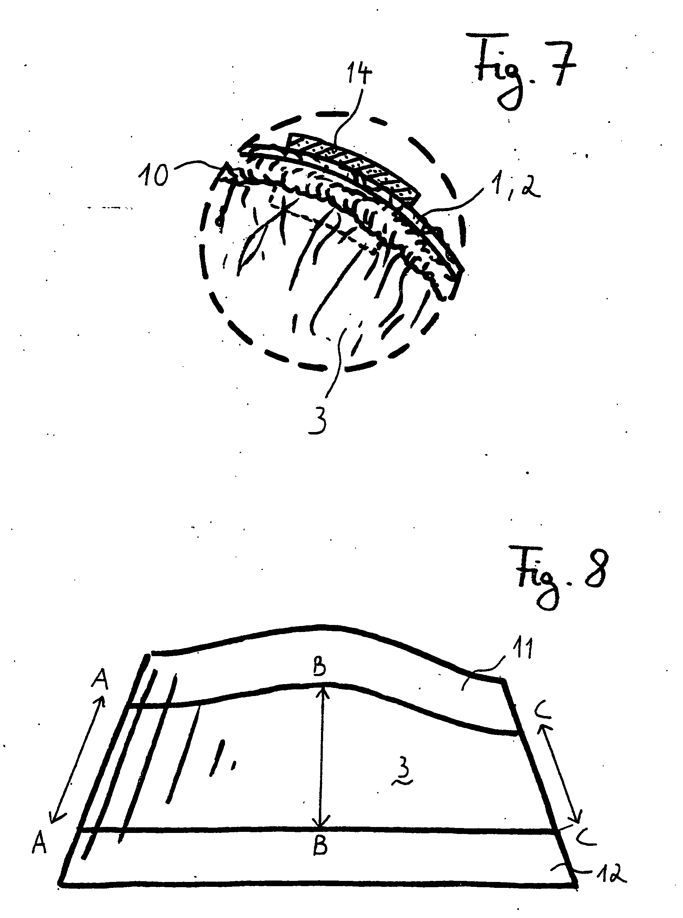

Figur 7 zeigt in einer vergrößerten Darstellung einen Teilabschnitt von einem der beiden Spannrahmen 1, 2 und des angrenzenden und mit diesem verbundenen Abdeckmittels 3. Die beiden Endbereiche des Abdeckmittels 3, entlang derer die Spannrahmen 1, 2 angeordnet sind, sind in einer im wesentlichen senkrecht zu den Spannrahmen 1, 2 verlaufenden Richtung zu jeweils einer Wulst 10 zusammengerollt. Dabei ist es vorteilhaft, wenn die wulstartig ausgebildeten Endbereiche 10 des Abdeckmittels 3 unausrollbar ausgebildet sind, etwa durch Verwendung eines Klebstoffes oder durch Verschweißen. In der Ausführungsform der Figur 7 sind die wulstartigen Endbereiche 10 des Abdeckmittels jeweils an der Innenseite eines Spannrahmens 1, 2 angeordnet, wobei der Wulst 10 mit dem Spannrahmen 1, 2 verklebt sein kann. Der von dem Wulst 10 ausgehende Teil des Abdeckmittels 3 ist dann bevorzugt zumindest einmal um den Spannrahmen 1, 2 herum geführt, so daß das Abdeckmittel 3 den Spannrahmen 1, 2 vollständig umgibt. Es ist aber auch möglich, die Wulst 10 um den Spannrahmen 1, 2 herum auszubilden, so daß der Spannrahmen 1, 2 innerhalb der Wulst 10 verläuft.

In dieser Weise kann das Abdeckmittel 3 als ein Druckpolster dienen, mit dem zumindest der zweite Spannrahmen 1 oder aber auch beide Spannrahmen 1, 2 vorteilhaft versehen sind und das sich entlang der Spannrahmen 1, 2 erstreckt. Es ist aber auch möglich, alleine oder zusätzlich ein separates Druckpolster 14 vorzusehen, wie es in Figur 7 gezeigt ist und mit dem zumindest der zweite Spannrahmen 1 versehen ist und das sich sich entlang des betreffenden Spannrahmens 1, 2 erstreckt. Dabei ist es möglich, daß sich dieses Druckpolster 14 entlang des gesamten jeweiligen Spannrahmens 1, 2 oder aber entlang eines oder mehrerer Teilabschnitte des jeweiligen Spannrahmens 1, 2 erstreckt. Das Druckpolster 14 umgibt bevorzugt den betreffenden Spannrahmen 1, 2 und den mit diesem in Verbindung stehenden wulstartigen Endbereich 10 des Abdeckmittels 3 und besteht aus einem weichem Material, das vorteilhaft Schaumstoff ist.

Figur 8 zeigt das Abdeckmittel 3 vor der Verbindung mit den beiden Spannrahmen 1, 2. Das Abdeckmittel 3 kann dabei streifenförmig offen oder aber ringförmig und damit schlauchförmig geschlossen ausgebildet sein. Es weist zwei Endbereiche 11, 12 auf, entlang derer das Abdeckmittel 3 mit den Spannrahmen 1, 2 verbunden wird, was bevorzugt dadurch geschieht, daß diese Abschnitte 11, 12 um die Spannrahmen 1, 2 gewickelt werden. Bevorzugt sind die Dimensionen des Abdeckmittels derart gewählt, daß sie entlang der Linie A-A, die den im Bereich der unteren Schneidezähne anzuordnenden Abschnitt kennzeichnet, etwa 30 mm, entlang der Linie B-B, die im Bereich der Mundwinkel anzuordnende Abschnitte kennzeichnet, etwa 35 mm und entlang der Linie C-C, die den im Bereich der oberen Schneidezähne anzuordnenden Abschnitt kennzeichnet, etwa 25 mm betragen. In jedem Fall kann das Abdeckmittel 3 unter in Standardgrößen hergestellt werden, zum Beispiel für Kinder und für Erwachsene.

## Patentansprüche

1. Vorrichtung zum Abdecken der Lippen und Mundwinkel und zum Abhalten der Lippen (4), Wangen (9) und Mundwinkel von den Zahnreihen im Mund eines Patienten mit einem ersten Spannrahmen (2) zur äußeren Anlage an der Mundöffnung, einem zweiten, elastischen Spannrahmen (1) zum Einlegen in das Vestibulum des Mundes des Patienten und einem die Spannrahmen (1, 2) verbindenden Abdeckmittel (3), wobei die Spannrahmen (1, 2) entlang zweier gegenüberliegender Endbereiche des Abdeckmittels (3) angeordnet sind, so daß die eingesetzte Vorrichtung zur Mundhöhle hin offen ist, wobei :
- das Abdeckmittel (3) aus einer Folie gebildet ist, die einem Verbiegen im Gegensatz zum Dehnen im wesentlichen keinen Widerstand entgegensetzt, und
- der zweite Spannrahmen (1) geeignet ist, in elastisch verformtem Zustand in das Vestibulum des Patienten eingelegt zu werden und das Abdeckmittel (3) intraoral zu fixieren,
- so daß bei eingesetzter Vorrichtung das Abdeckmittel (3) zwischen dem extraoralen ersten Spannrahmen (2) und dem intraoralen zweiten Spannrahmen (1) in Anlage an die Lippen (4) und Mundwinkel um diese herum verläuft und geeignet ist, im wesenstlichen gleichmäßig flächig verteilt Druckkräfte auf Lippen und Mundwinkel auszuüben, die die Lippen (4), Wangen (9) und Mundwinkel von den Zähnen (8) wegdrücken und die Mundöffnung zirkulär in eine geöffnete Stellung vorspannen, wobei die Vorrichtung das Schließen des Mundes zuläßt.

2. Vorrichtung nach Anspruch 1, **dadurch gekennzeichnet, daß** das Abdeckmittel (3) aus einem elastisch dehnbaren Material hergestellt ist.

3. Vorrichtung nach Anspruch 2, **dadurch gekennzeichnet, daß** das elastisch dehnbare Material Latex ist.

4. Vorrichtung nach einem der vorhergehenden Ansprüche, **dadurch gekennzeichnet, daß** das Abdeckmittel (3) schlauchförmig geschlossen ausgebildet ist.

5. Vorrichtung nach einem der vorhergehenden Ansprüche, **dadurch gekennzeichnet, daß** der erste Spannrahmen (2) starr oder elastisch ist.

6. Vorrichtung nach einem der vorhergehenden Ansprüche, **dadurch gekennzeichnet, daß** die Spannrahmen (1, 2) aus Draht, Edelstahldraht, Federstahldraht, Vollprofilen oder Röhrchen gebildet sind.

7. Vorrichtung nach einem der vorhergehenden Ansprüche, **dadurch gekennzeichnet, daß** die Spannrahmen (1, 2) aus Metallegierungen, Kunststoffen, Gummi oder Verbundwerkstoffen gebildet sind.

8. Vorrichtung nach einem der vorhergehenden Ansprüche, **dadurch gekennzeichnet, daß** die Spannrahmen (1, 2) ringförmig geschlossen ausgebildet sind.

9. Vorrichtung nach einem der vorhergehenden Ansprüche, **dadurch gekennzeichnet, daß** die Spannrahmen (1, 2) eine im wesentlichen elliptische Grundform aufweisen oder in eine im wesentlichen elliptische Grundform gebracht werden können.

10. Vorrichtung nach einem der vorhergehenden Ansprüche, **dadurch gekennzeichnet, daß** der erste (2) und der zweite (1) Spannrahmen unterschiedliche Abmessungen aufweisen.

11. Vorrichtung nach Anspruch 10, **dadurch gekennzeichnet, daß** der zweite Spannrahmen (1) größere Abmessungen als der erste Spannrahmen (2) aufweist.

12. Vorrichtung nach einem der vorhergehenden Ansprüche, **dadurch gekennzeichnet, daß** die Spannrahmen (1, 2) eine kreisrunde Form aufweisen oder in eine kreisrunde Form bringbar sind, wobei der zweite Spannrahmen (1) einen kleineren Außendurchmesser als der erste Spannrahmen (2) aufweist.

13. Vorrichtung nach Anspruch 12, **dadurch gekennzeichnet, daß** der Außendurchmesser des zweiten Spannrahmens (1) in der kreisrunden Form 40 mm bis 120 mm beträgt.

14. Vorrichtung nach Anspruch 12 oder 13, **dadurch gekennzeichnet, daß** der Außendurchmesser des ersten Spannrahmens (2) in der kreisrunden Form 40 mm bis 120 mm beträgt.

15. Vorrichtung nach einem der vorhergehenden Ansprüche, **dadurch gekennzeichnet, daß** der erste Spannrahmen (2) und/oder der zweite Spannrahmen (1) vollumfänglich mit dem Abdeckmittel (3) fest verbunden ist.

16. Vorrichtung nach einem der vorhergehenden Ansprüche, **dadurch gekennzeichnet, daß** die beiden Endbereiche des Abdeckmittels (3), entlang derer die Spannrahmen (1, 2) angeordnet sind, in einer senkrecht zu den Spannrahmen (1, 2) verlaufenden Richtung zu jeweils einer Wulst (10) zusammengerollt sind.

17. Vorrichtung nach Anspruch 16, **dadurch gekennzeichnet, daß** die beiden Endbereiche des Abdeckmittels (3), entlang derer die Spannrahmen (1, 2) angeordnet sind, sich um die Spannrahmen (1, 2) erstrecken.

18. Vorrichtung nach Anspruch 16 oder 17, **dadurch gekennzeichnet, daß** die wulstartig ausgebildeten Endbereiche (10) des Abdeckmittels (3) unausrollbar ausgebildet sind.

19. Vorrichtung nach einem der Ansprüche 16 bis 18, **dadurch gekennzeichnet, daß** die wulstartigen Endbereiche (10) des Abdeckmittels (3) jeweils an der Innenseite eines Spannrahmens (1, 2) angeordnet sind.

20. Vorrichtung nach einem der vorhergehenden Ansprüche, **dadurch gekennzeichnet, daß** wenigstens der zweite Spannrahmen (1) mit wenigstens einem sich entlang des Spannrahmens (1, 2) erstreckenden Druckpolster versehen ist.

21. Vorrichtung nach Anspruch 20, **dadurch gekennzeichnet, daß** das Druckpolster den zweiten Spannrahmen (1) und den mit diesem in Verbindung stehenden wulstartigen Endbereich (10) des Abdeckmittels (3) umgibt.

22. Vorrichtung nach Anspruch 20 oder 21, **dadurch gekennzeichnet, daß** das Druckpolster aus einem weichem Material besteht.

23. Vorrichtung nach einem der Ansprüche 20 bis 22, **dadurch gekennzeichnet, daß** das Druckpolster aus Schaumstoff gebildet ist.

24. Vorrichtung nach einem der vorhergehenden Ansprüche, **dadurch gekennzeichnet, daß** die Dimensionen des Abdeckmittels (3) in Richtung der Verbindungslinie zwischen den beiden Spannrahmen (1, 2) im Bereich der oberen Schneidezähne etwa 25 mm, im Bereich der unteren Schneidezähne etwa 30 mm und im Bereich der Mundwinkel etwa 35 mm beträgt.

## Claims

1. Device for covering the lips and corners of the mouth and for retracting the lips (4), cheeks (9) and corners of the mouth from the rows of teeth in the mouth of a patient, the device having a first tensioning frame (2) for external abutment against the mouth opening, a second, elastic tensioning frame (1) for insertion into the vestibule of the mouth of the patient and a covering means (3) connecting the tensioning frames (1, 2), wherein the tensioning frames (1, 2) are arranged along two opposite end regions of the covering means (3), so that the inserted device is open towards the oral cavity, wherein
- the covering means (3) is made of a film that essentially offers no resistance to bending as opposed to stretching, and
- the second tensioning frame (1) is suitable for being introduced in an elastically deformed state into the vestibule of the patient and fixing the covering means (3) intraorally,
- so that, when the device is inserted, the covering means (3) extends between the extraoral first tensioning frame (2) and the intraoral second tensioning frame (1) in abutment against and around the lips (4) and corners of the mouth, and is suitable for exerting on the lips and corners of the mouth compressive forces that are essentially uniformly distributed over an area and that force the lips (4), cheeks (9) and corners of the mouth away from the teeth (8) and pre-stresses the oral cavity in a circular manner into an open position, wherein the device permits the closing of the mouth.

2. Device according to claim 1, **characterized in that** the covering means (3) is made from an elastically expandable material.

3. Device according to claim 2, **characterized in that** the elastically expandable material is latex.

4. Device according to any of the preceding claims, **characterized in that** the covering means (3) is constructed tubularly closed.

5. Device according to any of the preceding claims, **characterized in that** the first tensioning frame (2) is rigid or elastic.

6. Device according to any of the preceding claims, **characterized in that** the tensioning frames (1, 2) are formed of wire, stainless steel wire, spring steel wire, solid profiles or small tubes.

7. Device according to any of the preceding claims, **characterized in that** the tensioning frames (1, 2) are formed of metal alloys, plastics, rubber or composite materials.

8. Device according to any of the preceding claims, **characterized in that** the tensioning frames (1, 2) are constructed annularly closed.

9. Device according to any of the preceding claims, **characterized in that** the tensioning frames (1, 2) have an essentially elliptical basic shape or can be brought into an essentially elliptical basic shape.

10. Device according to any of the preceding claims, **characterized in that** the first (2) and the second (1) tensioning frame have different dimensions.

11. Device according to claim 10, **characterized in that** the second tensioning frame (1) has greater dimensions than the first tensioning frame (2).

12. Device according to any of the preceding claims, **characterized in that** the tensioning frames (1, 2) have a circular shape or are able to be brought into a circular shape, the second tensioning frame (1) having a smaller outer diameter than the first tensioning frame (2).

13. Device according to claim 12, **characterized in that** in the circular shape the outer diameter of the second tensioning frame (1) is 40 mm to 120 mm.

14. Device according to claim 12 or 13, **characterized in that** in the circular shape the outer diameter of the first tensioning frame (2) is 40 mm to 120 mm.

15. Device according to any of the preceding claims, **characterized in that** the first tensioning frame (2) and/or the second tensioning frame (1) is fixedly connected to the covering means (3) along the entire circumference.

16. Device according to any of the preceding claims, **characterized in that** the two end regions of the covering means (3), along which the tensioning frames (1, 2) are arranged, are each rolled up into a respective roll in a direction extending perpendicularly to the tensioning frames (1, 2).

17. Device according to claim 16, **characterized in that** the two end regions of the covering means (3), along which the tensioning frames (1, 2) are arranged, extend around the tensioning frames (1, 2).

18. Device according to claim 16 or 17, **characterized in that** the end regions (10), constructed like a roll, of the covering means (3) are constructed not to be unrollable.

19. Device according to any of claims 16 to 18, **characterized in that** the roll-like end regions (10) of the covering means (3) are each disposed on the inside of a tensioning frame (1, 2).

20. Device according to any of the preceding claims, **characterized in that** at least the second tensioning frame (1) is provided with at least one pressure pad extending along the tensioning frame (1, 2).

21. Device according to claim 20, **characterized in that** the pressure pad surrounds the second tensioning frame (1) and the roll-like end region (10) of the covering means (3) connected thereto.

22. Device according to claim 20 or 21, **characterized in that** the pressure pad consists of a soft material.

23. Device according to any of claims 20 to 22, **characterized in that** the pressure pad is made of foam.

24. Device according to any of the preceding claims, **characterized in that** the dimension of the covering means (3) in the direction of the connection line between the two tensioning frames (1, 2) is about 25 mm in the area of the upper incisors, about 30 mm in the area of the lower incisors and about 35 mm in the area of the corners of the mouth.

## Revendications

1. Dispositif pour recouvrir les lèvres et les commissures des lèvres et pour écarter les lèvres (4), les joues (9) et les commissures des rangées de dents dans la bouche d'un patient, comprenant un premier cadre tendeur (2), destiné à être appliqué de l'extérieur contre l'orifice buccal, un deuxième cadre tendeur (1) élastique, destiné à être inséré dans le vestibule de la bouche du patient, et un moyen de recouvrement (3) reliant les cadres tendeurs (1, 2), lesquels cadres tendeurs (1, 2) sont disposés le long de deux zones d'extrémité opposées du moyen de recouvrement (3), de sorte que le dispositif mis en place est ouvert en direction de la cavité buccale, sachant que
- le moyen de recouvrement (3) est constitué d'une feuille qui n'oppose pas de résistance sensible à la torsion, contrairement à l'allongement, et
- le deuxième cadre tendeur (1) convient pour être inséré à l'état élastiquement déformé dans le vestibule du patient et pour fixer le moyen de recouvrement (3) de façon intraorale,
- de sorte que lorsque le dispositif est mis en place, le moyen de recouvrement (3), qui s'étend entre le premier cadre tendeur (2), extraoral, et le deuxième cadre tendeur (1), intraoral, vient en appui contre les lèvres (4) et les commissures, en entourant celles-ci, et est adapté pour exercer des forces de pression sur les lèvres et les commissures, en les répartissant de façon sensiblement uniforme sur la surface, lesquelles forces repoussent les lèvres (4), les joues (9) et les commissures par rapport aux dents (8) et maintiennent l'orifice buccal dans une position ouverte circulaire, le dispositif permettant toutefois de fermer la bouche.

2. Dispositif selon la revendication 1, **caractérisé par le fait que** le moyen de recouvrement (3) est fabriqué à partir d'un matériau extensible élastiquement.

3. Dispositif selon la revendication 2, **caractérisé par le fait que** le matériau extensible élastiquement est du latex.

4. Dispositif selon une des revendications précédentes, **caractérisé par le fait que** le moyen de recouvrement (3) est réalisé sous forme de tube fermé.

5. Dispositif selon une des revendications précédentes, **caractérisé par le fait que** le premier cadre tendeur (2) est rigide ou élastique.

6. Dispositif selon une des revendications précédentes, **caractérisé par le fait que** les cadres tendeurs (1, 2) sont constitués de fil métallique, de fil d'acier spécial, de fil d'acier à ressort, de profils pleins ou de petits tubes.

7. Dispositif selon une des revendications précédentes, **caractérisé par le fait que** les cadres tendeurs (1, 2) sont réalisés à partir d'alliages métalliques, de matières synthétiques, de caoutchouc ou de matériaux composites.

8. Dispositif selon une des revendications précédentes, **caractérisé par le fait que** les cadres tendeurs (1, 2) sont réalisés sous forme d'anneaux fermés.

9. Dispositif selon une des revendications précédentes, **caractérisé par le fait que** les cadres tendeurs (1, 2) présentent une forme de base sensiblement elliptique ou peuvent être mis dans une forme de base sensiblement elliptique.

10. Dispositif selon une des revendications précédentes, **caractérisé par le fait que** les premier (2) et deuxième (1) cadres tendeurs ont des dimensions différentes.

11. Dispositif selon la revendication 10, **caractérisé par le fait que** le deuxième cadre tendeur (1) présente des dimensions qui sont supérieures à celles du premier cadre tendeur (2).

12. Dispositif selon une des revendications précédentes, **caractérisé par le fait que** les cadres tendeurs (1, 2) présentent une forme circulaire ou peuvent être mis dans une forme circulaire, le deuxième cadre tendeur (1) ayant un diamètre extérieur inférieur à celui du premier cadre tendeur (2).

13. Dispositif selon la revendication 12, **caractérisé par le fait que** le diamètre extérieur du deuxième cadre tendeur (1), dans la forme circulaire, est compris entre 40 mm et 120 mm.

14. Dispositif selon la revendication 12 ou 13, **caractérisé par le fait que** le diamètre extérieur du premier cadre tendeur (2), dans la forme circulaire, est compris entre 40 mm et 120 mm.

15. Dispositif selon une des revendications précédentes, **caractérisé par le fait que** le premier cadre tendeur (2) et/ou le deuxième cadre tendeur (1) est/sont relié(s) solidement sur tout leur pourtour au moyen de recouvrement (3).

16. Dispositif selon une des revendications précédentes, **caractérisé par le fait que** les deux zones d'extrémité du moyen de recouvrement (3), le long desquelles sont disposés les cadres tendeurs (1, 2), sont enroulées dans une direction perpendiculaire aux cadres tendeurs (1, 2) pour former respectivement un bourrelet (10).

17. Dispositif selon la revendication 16, **caractérisé par le fait que** les deux zones d'extrémité du moyen de recouvrement (3), le long desquelles sont disposés les cadres tendeurs (1, 2), s'étendent autour des cadres tendeurs (1, 2).

18. Dispositif selon la revendication 16 ou 17, **caractérisé par le fait que** les zones d'extrémité (10) conformées en bourrelets du moyen de recouvrement (3) sont réalisées de manière à ne pas pouvoir être déroulées.

19. Dispositif selon une des revendications 16 à 18, **caractérisé par le fait que** les zones d'extrémité (10) en forme de bourrelets du moyen de recouvrement (3) sont disposées respectivement sur la face interne d'un cadre tendeur (1, 2).

20. Dispositif selon une des revendications précédentes, **caractérisé par le fait qu'**au moins le deuxième cadre tendeur (1) est pourvu d'au moins un rembourrage s'étendant le long du cadre tendeur (1, 2).

21. Dispositif selon la revendication 20, **caractérisé par le fait que** le rembourrage entoure le deuxième cadre tendeur (1) et la zone d'extrémité (10) en forme de bourrelet du moyen de recouvrement (3) reliée à celui-ci.

22. Dispositif selon la revendication 20 ou 21, **caractérisé par le fait que** le rembourrage est constitué d'un matériau mou.

23. Dispositif selon une des revendications 20 à 22, **caractérisé par le fait que** le rembourrage est constitué d'une mousse synthétique.

24. Dispositif selon une des revendications précédentes, **caractérisé par le fait que** les dimensions du moyen de recouvrement (3), dans le sens de la ligne de jonction entre les deux cadres tendeurs (1, 2), sont d'environ 25 mm dans la région des incisives supérieures, d'environ 30 mm dans la région des incisives inférieures et d'environ 35 mm dans la région des commissures des lèvres.
